# EUROPEAN PATENT APPLICATION

(11) **EP 2 996 126 A2**
(43) Date of publication of application: **16.03.2016**
(21) Application number: 15718756.8
(22) Date of filing: 19.01.2015
(51) Int. Cl.: H01G 9/20

(54) **DYE-SENSITIZED SOLAR CELL EQUIPPED WITH BEAM-CONDENSING UNIT**

(30) Priority: 27.01.2014 JP 2014012867
(71) Applicant: Showa Co., Ltd., Ikoma-shi, Nara 630-0142 (JP)
(72) Inventor: TAKAYASU, Teruki, Ikoma-city Nara 630-0142 (JP); ONODA, Kinji, Ikoma-city Nara 630-0142 (JP); MATSUOKA, Ryosuke, Ikoma-city Nara 630-0142 (JP); HATTORI, Takanori, Ikoma-city Nara 630-0142 (JP)
(74) Representative: Vossius & Partner Patentanwälte Rechtsanwälte mbB
(86) International application number: PCT/JP2015/051217
(87) International publication number: WO 2015/064774

(57) **Abstract**

An object of the present invention is to provide a dye-sensitized solar cell that can exhibit high electrical power corresponding to high photoelectric conversion efficiency.

Provided is a dye-sensitized solar cell in which a photoelectrode and a counter electrode are disposed opposite to each other via an electrolyte layer;
(1) the photoelectrode comprising a titanium material and a titanium oxide layer containing a dye sensitizing agent formed on the titanium material;
(2) the counter electrode comprising a transparent conductive glass or transparent conductive film coated with an electrochemical-reduction catalyst layer; and
(3) a light-concentrating device being disposed on the counter electrode side.

## Description

### Technical Field

The present invention relates to a dye-sensitized solar cell.

### Background Art

There are various types of solar cells, including monocrystal, polycrystal, and amorphous silicon solar cells, CIGS, CdTe, GaAs, and other compound semiconductor solar cells, organic thin film solar cells, dye-sensitized solar cells, and the like.

Silicon solar cells are currently mainstream. However, silicon solar cells require high-purity silicon materials. Moreover, the production of silicon solar cells requires a high temperature and a high vacuum, causing high production costs. Thus, there is room for improvement in this respect.

Under such circumstances, dye-sensitized solar cells have recently been attracting attention. Dye-sensitized solar cells can be easily produced because of their simple structure, and there are many constituent materials thereof. Moreover, dye-sensitized solar cells can be produced at a low cost, and have high photoelectric conversion efficiency. For these reasons, dye-sensitized solar cells have been attracting attention as next-generation solar cells.

A dye-sensitized solar cell can be constructed by a simple method in which an electrolyte solution having reversible electrochemical redox characteristics is injected between a photoelectrode and a counter electrode, and the photoelectrode and the counter electrode are sealed and wire-connected.

The photoelectrode is conventionally produced in the following manner. First, a paste agent containing titanium oxide particles is coated on the surface of transparent conductive glass, which is a glass substrate on which a transparent conductive film, such as ITO (indium tin oxide) or FTO (fluorine tin oxide), is formed. Then, the obtained coated product is heated at a temperature of 400 to 500°C, thereby producing an electrode having a porous titanium oxide layer. Subsequently, the obtained electrode is immersed in an organic solution containing a dye sensitizing agent, such as ruthenium-based dye or indoline-based dye, thereby producing a photoelectrode in which the dye sensitizing agent is adsorbed to the surface of the porous titanium oxide.

Next, the counter electrode is produced by forming a platinum layer having an electrochemical reduction action by sputtering, etc., on a glass substrate or film on which a transparent conductive film is formed.

In conventional dye-sensitized solar cells, however, transparent conductive films that constitute photoelectrodes and counter electrodes have relatively high electrical resistance. Accordingly, there is room for improvement in terms of the significant reduction in the photoelectric conversion efficiency of dye-sensitized solar cells with a larger titanium oxide-coated area (area of transparent conductive film). Moreover, the electrical resistance of the transparent conductive film is increased by heat treatment during the production of the porous titanium oxide layer (titanium oxide sintered body). Accordingly, there is room for improvement in terms of the reduction in the photoelectric conversion efficiency of dye-sensitized solar cells.

Under such circumstances, techniques to use metal titanium as a photoelectrode substrate have been examined. According to these techniques, electrical resistance is lower than that of glass substrates on which conventional transparent conductive films are formed; photoelectric conversion efficiency is higher than that of dye-sensitized solar cells using conventional transparent conductive films, particularly those having a large area of titanium oxide coating; and corrosion resistance to iodine, etc., contained in electrolyte solutions used in dye-sensitized solar cells is imparted.

However, there was a problem in that the photoelectric conversion efficiency of dye-sensitized solar cells was less than that of silicon type solar cells, which form the mainstream of current solar cells, and the obtained electrical power was low.

From such a viewpoint, dye-sensitized solar cells using light-concentrating devices have also been examined.

For example, PTL 1 discloses a technique to improve the conversion efficiency of a dye-sensitized solar cell made of transparent conductive glass or transparent conductive plastic by providing a microlens array on the electrode side to collect incident light, and providing a mirror on the counter electrode side to reflect the transmitted light and reapply it to the porous layer.

Further, PTL 2 discloses a technique to increase condensing efficiency by covering the light-receiving surface of a glass substrate coated with an ITO (indium tin oxide) film, or a transparent plastic material, such as PET (polyethylene terephthalate) or PEN (polyethylene naphthalate), with a paraxylylene resin film in a convex curved shape.

However, due to the use of transparent conductive films having high electrical resistance, these techniques did not provide much improvement in photoelectric conversion efficiency. Thus, there was room for improvement in that regard.

### Citation List

### Patent Literature

- PTL 1:: JP2009-224105A
- PTL 2:: JP2009-193702A

### Summary of Invention

### Technical Problem

An object of the present invention is to provide a dye-sensitized solar cell that can exhibit high electrical power corresponding to high photoelectric conversion efficiency.

### Solution to Problem

As a result of intensive studies to solve the problem of the prior art, the present inventor found that the above object can be achieved by a dye-sensitized solar cell having a specific structure.

That is, the present invention provides the following dye-sensitized solar cell and method for producing a dye-sensitized solar cell.

### Embodiment of Invention 1: Dye-Sensitized Solar Cell

Item 1. A dye-sensitized solar cell in which a photoelectrode and a counter electrode are disposed opposite to each other via an electrolyte layer;
(1) the photoelectrode comprising a titanium material and a titanium oxide layer containing a dye sensitizing agent formed on the titanium material;
(2) the counter electrode comprising a transparent conductive glass or transparent conductive film coated with an electrochemical-reduction catalyst layer; and
(3) a light-concentrating device being disposed on the counter electrode side.

Item 2. The dye-sensitized solar cell according to Item 1, wherein the titanium material is a material selected from the group consisting of metal titanium, titanium alloys, surface-treated metal titanium, and surface-treated titanium alloys.

Item 3. The dye-sensitized solar cell according to Item 1 or 2, wherein the titanium oxide layer has a rectangular shape.

Item 4. The dye-sensitized solar cell according to any one of Items 1 to 3, wherein the electrochemical-reduction catalyst layer is a platinum catalyst layer.

Item 5. The dye-sensitized solar cell according to any one of Items 1 to 4, wherein the transparent conductive glass or transparent conductive film of the counter electrode is subjected to antireflection-film formation.

Item 6. The dye-sensitized solar cell according to any one of Items 1 to 4, wherein the counter electrode further comprises an antireflection film on a light irradiation surface of the transparent conductive glass or transparent conductive film.

Item 7. The dye-sensitized solar cell according to any one of Items 1 to 6, which is provided with a cooling system.

Item 8. The dye-sensitized solar cell according to any one of Items 1 to 7, wherein the titanium material of the photoelectrode is produced by the following surface treatment method comprising the steps of:
(1) forming titanium nitride on the surface of a metal titanium material or titanium alloy material; and
(2) anodizing the metal titanium material or titanium alloy material with the titanium nitride formed on the surface thereof obtained in step (1) using an electrolyte solution that has an etching effect on titanium at a voltage higher than the spark discharge generating voltage, thereby forming an anatase-type titanium oxide film.

Item 9. The dye-sensitized solar cell according to any one of Items 1 to 7, wherein the titanium material of the photoelectrode is produced by the following surface treatment method comprising the steps of:
(1) forming titanium nitride on the surface of a metal titanium material or titanium alloy material;
(2) anodizing the metal titanium material or titanium alloy material with the titanium nitride formed on the surface thereof obtained in step (1) in an electrolyte solution that does not have an etching effect on titanium; and
(3) heating the anodized metal titanium material or titanium alloy material obtained in step (2) in an oxidizing atmosphere, thereby forming an anatase-type titanium oxide film.

Item 10. The dye-sensitized solar cell according to Item 8 or 9, wherein the step of forming titanium nitride is performed by one treatment method selected from the group consisting of PVD treatment, CVD treatment, spraying treatment, heat treatment under an ammonia gas atmosphere, and heat treatment under a nitrogen gas atmosphere.

Item 11. The dye-sensitized solar cell according to Item 10, wherein the heat treatment under a nitrogen gas atmosphere is performed in the presence of an oxygen-trapping agent.

### Embodiment of Invention 2: Dye-Sensitized Solar Cell

Item 1. A dye-sensitized solar cell in which a photoelectrode and a counter electrode are disposed opposite to each other via an electrolyte layer;
(1) the photoelectrode comprising a titanium material selected from the group consisting of metal titanium and titanium alloys, and a titanium oxide layer containing a dye sensitizing agent formed on the titanium material;
(2) the counter electrode comprising a transparent conductive glass or transparent conductive film coated with an electrochemical-reduction catalyst layer; and
(3) a light-concentrating device being disposed on the counter electrode side;
the electrochemical-reduction catalyst layer being a platinum catalyst layer having a thickness of 0.5 to 1 nm;
the electrolyte layer having a thickness of 25 to 100 µml; and
the photoelectrode being produced by the following method comprising the steps of:
(1) forming titanium nitride on the surface of a metal titanium material or titanium alloy material;
(2) anodizing the metal titanium material or titanium alloy material with the titanium nitride formed on the surface thereof obtained in step (1) using an electrolyte solution that has an etching effect on titanium at a voltage higher than the spark discharge generating voltage, thereby forming an anatase-type titanium oxide film; and
(3) applying a paste agent containing titanium oxide to the anatase-type titanium oxide film obtained in step (2), followed by heat treatment at a temperature of 400 to 500°C under an oxidizing atmosphere, thereby forming a titanium oxide layer.

Item 2. A dye-sensitized solar cell in which a photoelectrode and a counter electrode are disposed opposite to each other via an electrolyte layer;
(1) the photoelectrode comprising a titanium material selected from the group consisting of metal titanium and titanium alloys, and a titanium oxide layer containing a dye sensitizing agent formed on the titanium material;
(2) the counter electrode comprising a transparent conductive glass or transparent conductive film coated with an electrochemical-reduction catalyst layer; and
(3) a light-concentrating device being disposed on the counter electrode side;
the electrochemical-reduction catalyst layer being a platinum catalyst layer having a thickness of 0.5 to 1 nm;
the electrolyte layer having a thickness of 25 to 100 µm; and
the photoelectrode being produced by the following method comprising the steps of:
(1) forming titanium nitride on the surface of a metal titanium material or titanium alloy material;
(2) anodizing the metal titanium material or titanium alloy material with the titanium nitride formed on the surface thereof obtained in step (1) in an electrolyte solution that does not have an etching effect on titanium;
(3) heating the anodized metal titanium material or titanium alloy material obtained in step (2) in an oxidizing atmosphere, thereby forming an anatase-type titanium oxide film; and
(4) applying a paste agent containing titanium oxide to the anatase-type titanium oxide film obtained in step (3), followed by heat treatment at a temperature of 400 to 500°C under an oxidizing atmosphere, thereby forming a titanium oxide layer.

Item 3. The dye-sensitized solar cell according to Item 1 or 2, wherein the titanium oxide layer has a rectangular shape.

Item 4. The dye-sensitized solar cell according to any one of Items 1 to 3, wherein the transparent conductive glass or transparent conductive film of the counter electrode is subjected to antireflection-film formation.

Item 5. The dye-sensitized solar cell according to any one of Items 1 to 3, wherein the counter electrode further comprises an antireflection film on a light irradiation surface of the transparent conductive glass or transparent conductive film.

Item 6. The dye-sensitized solar cell according to any one of Items 1 to 5, which is provided with a cooling system.

Item 7. The dye-sensitized solar cell according to any one of Items 1 to 6, wherein the step of forming titanium nitride is performed by one treatment method selected from the group consisting of PVD treatment, CVD treatment, spraying treatment, heat treatment under an ammonia gas atmosphere, and heat treatment under a nitrogen gas atmosphere.

Item 8. The dye-sensitized solar cell according to Item 7, wherein the heat treatment under a nitrogen gas atmosphere is performed in the presence of an oxygen-trapping agent.

### Embodiment of Invention 3: Method for Producing Dye-Sensitized Solar Cell

Item 1. A method for producing a dye-sensitized solar cell in which a photoelectrode and a counter electrode are disposed opposite to each other via an electrolyte layer;
(1) the photoelectrode comprising a titanium material and a titanium oxide layer containing a dye sensitizing agent formed on the titanium material;
(2) the counter electrode comprising a transparent conductive glass or transparent conductive film coated with an electrochemical-reduction catalyst layer; and
(3) a light-concentrating device being disposed on the counter electrode side;
the titanium material being a material selected from the group consisting of metal titanium and titanium alloys; and
the photoelectrode being produced by the following steps of:
(1) forming titanium nitride on the surface of a metal titanium material or titanium alloy material;
(2) anodizing the metal titanium material or titanium alloy material with the titanium nitride formed on the surface thereof obtained in step (1) using an electrolyte solution that has an etching effect on titanium at a voltage higher than the spark discharge generating voltage, thereby forming an anatase-type titanium oxide film;
(3) applying a paste agent containing titanium oxide to the anatase-type titanium oxide film obtained in step (2), followed by heat treatment at a temperature of 400 to 500°C under an oxidizing atmosphere, thereby forming a titanium oxide layer; and
(4) immersing the titanium oxide layer obtained in step (3) in a solution containing a dye sensitizing agent so that the dye sensitizing agent is adsorbed to the titanium oxide layer.

Item 2. A method for producing a dye-sensitized solar cell in which a photoelectrode and a counter electrode are disposed opposite to each other via an electrolyte layer;
(1) the photoelectrode comprising a titanium material and a titanium oxide layer containing a dye sensitizing agent formed on the titanium material;
(2) the counter electrode comprising a transparent conductive glass or transparent conductive film coated with an electrochemical-reduction catalyst layer; and
(3) a light-concentrating device being disposed on the counter electrode side;
the titanium material being a material selected from the group consisting of metal titanium and titanium alloys; and
the photoelectrode being produced by the following steps of:
(1) forming titanium nitride on the surface of a metal titanium material or titanium alloy material;
(2) anodizing the metal titanium material or titanium alloy material with the titanium nitride formed on the surface thereof obtained in step (1) in an electrolyte solution that does not have an etching effect on titanium;
(3) heating the anodized metal titanium material or titanium alloy material obtained in step (2) in an oxidizing atmosphere, thereby forming an anatase-type titanium oxide film;
(4) applying a paste agent containing titanium oxide to the anatase-type titanium oxide film obtained in step (3), followed by heat treatment at a temperature of 400 to 500°C under an oxidizing atmosphere, thereby forming a titanium oxide layer; and
(5) immersing the titanium oxide layer obtained in step (4) in a solution containing a dye sensitizing agent so that the dye sensitizing agent is adsorbed to the titanium oxide layer.

Item 3. The method for producing a dye-sensitized solar cell according to Item 1 or 2, wherein the titanium oxide layer has a rectangular shape.

Item 4. The method for producing a dye-sensitized solar cell according to any one of Items 1 to 3, wherein the electrochemical-reduction catalyst layer is a platinum catalyst layer.

Item 5. The method for producing a dye-sensitized solar cell according to any one of Items 1 to 4, wherein the transparent conductive glass or transparent conductive film of the counter electrode is subjected to antireflection-film formation.

Item 6. The method for producing a dye-sensitized solar cell according to any one of Items 1 to 4, wherein the counter electrode further comprises an antireflection film on a light irradiation surface of the transparent conductive glass or transparent conductive film.

Item 7. The method for producing a dye-sensitized solar cell according to any one of Items 1 to 6, which is provided with a cooling system.

Item 8. The method for producing a dye-sensitized solar cell according to any one of Items 1 to 7, wherein the step of forming titanium nitride is performed by one treatment method selected from the group consisting of PVD treatment, CVD treatment, spraying treatment, heat treatment under an ammonia gas atmosphere, and heat treatment under a nitrogen gas atmosphere.

Item 9. The method for producing a dye-sensitized solar cell according to Item 8, wherein the heat treatment under a nitrogen gas atmosphere is performed in the presence of an oxygen-trapping agent.

Item 10. The method for producing a dye-sensitized solar cell according to any one of Items 1 to 9, wherein the electrochemical-reduction catalyst layer is a platinum catalyst layer having a thickness of 0.5 to 1 nm.

Item 11. The method for producing a dye-sensitized solar cell according to any one of Items 1 to 10, wherein the electrolyte layer has a thickness of 25 to 100 µm.

### Advantageous Effects of Invention

The dye-sensitized solar cell of the present invention can exhibit high electrical power that corresponds to high photoelectric conversion efficiency.

### Brief Description of Drawings

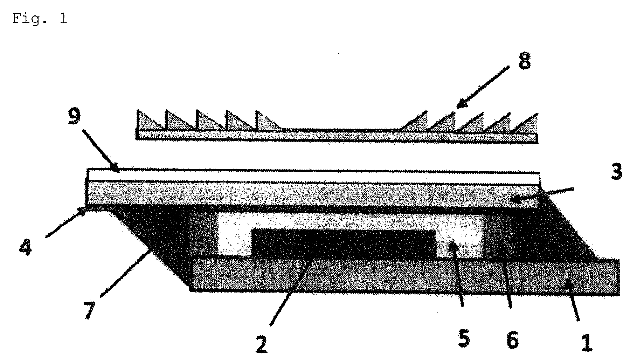

Fig. 1 is a schematic view (cross-sectional view) showing one embodiment of the dye-sensitized solar cell of the present invention.

### Description of Embodiments

The present invention is described in detail below. In the present specification, materials selected from the group consisting of metal titanium, titanium alloys, surface-treated metal titanium, and surface-treated titanium alloys are also referred to as simply "titanium materials."

In the dye-sensitized solar cell of the present invention, a photoelectrode and a counter electrode are disposed opposite to each other via an electrolyte layer;
(1) the photoelectrode comprising a titanium material and a titanium oxide layer containing a dye sensitizing agent formed on the titanium material;
(2) the counter electrode comprising a transparent conductive glass or transparent conductive film coated with an electrochemical-reduction catalyst layer; and
(3) a light-concentrating device being disposed on the counter electrode side.

Since the photoelectrode of the dye-sensitized solar cell is made of a titanium material that does not transmit light, light is irradiated from the counter electrode side. Further, high electrical power corresponding to high photoelectric conversion efficiency can be achieved by using a light-concentrating device between the counter electrode and the light source.

The dye-sensitized solar cell of the present invention comprises the following members.

### (1) Photoelectrode

In the dye-sensitized solar cell, a photoelectrode and a counter electrode are disposed opposite to each other via an electrolyte layer. The photoelectrode is obtained by forming a titanium oxide layer containing a dye sensitizing agent on a material selected from the group consisting of metal titanium, titanium alloys, surface-treated metal titanium, and surface-treated titanium alloys (hereinafter also referred to as "titanium material"; photoelectrode substrate).

### Photoelectrode Substrate

A titanium material itself can be used as the photoelectrode substrate. A titanium material serves as a substrate.

Metal titanium material is titanium itself. When a titanium alloy material is used, its type is not particularly limited. Examples of titanium alloys include Ti-6Al-4V, Ti-4.5Al-3V-2Fe-2Mo, Ti-0.5Pd, and the like.

Moreover, the photoelectrode substrate is preferably one in which a titanium material is treated by the following surface treatment method A or B to form an anatase-type titanium oxide film on the surface of the titanium material, because, for example, when electrons are transferred from the titanium oxide layer to the photoelectrode substrate due to light excitation by the dye sensitizing agent, leakage of the electrons into the electrolyte solution layer is prevented. The anatase-type titanium oxide film serves as a semiconductor layer.

In the photoelectrode substrate of the dye-sensitized solar cell of the present invention, a semiconductor layer containing a dye sensitizing agent is formed on a titanium material; thus, photoelectric conversion efficiency is high particularly when the titanium oxide coated area is large.

The thickness of the photoelectrode substrate is generally about 0.01 to 10 mm, preferably about 0.01 to 5 mm, and more preferably about 0.05 to 1 mm.

### Surface Treatment Method A

The photoelectrode substrate (titanium material for the photoelectrode) is preferably a photoelectrode substrate having a semiconductor layer containing anatase-type titanium oxide on the surface thereof, produced by the following surface treatment method comprising the steps of:

(1) forming titanium nitride on the surface of a metal titanium material or titanium alloy material; and
(2) anodizing the metal titanium material or titanium alloy material with titanium nitride formed on the surface thereof obtained in step (1) using an electrolyte solution that has an etching effect on titanium at a voltage higher than the spark discharge generating voltage, thereby forming an anatase-type titanium oxide film.

### Surface Treatment Method B

The photoelectrode substrate (titanium material for the photoelectrode) is preferably a photoelectrode substrate having a semiconductor layer containing anatase-type titanium oxide on the surface thereof, produced by the following surface treatment method comprising the steps of:
(1) forming titanium nitride on the surface of a metal titanium material or titanium alloy material;
(2) anodizing the metal titanium material or titanium alloy material with titanium nitride formed on the surface thereof obtained in step (1) in an electrolyte solution that does not have an etching effect on titanium; and
(3) heating the anodized metal titanium material or titanium alloy material obtained in step (2) in an oxidizing atmosphere, thereby forming an anatase-type titanium oxide film.

### Step (1) of Surface Treatment Methods A and B

In the step of forming titanium nitride on the surface of a titanium material (metal titanium or titanium alloy) (step (1)), a layer of titanium nitride generally with a thickness of about 0.1 to 100 µm can be formed on the surface of a titanium material. The thickness of the titanium nitride layer is preferably about 0.5 to 50 µm, and more preferably about 1 to 10 µm.

The means for forming titanium nitride on the surface of a titanium material is not particularly limited. For example, titanium nitride is physically or chemically attached to the surface of a titanium material, or titanium and nitrogen are reacted on the surface of a titanium material to thereby form titanium nitride.

The step of forming titanium nitride is preferably performed by one treatment method selected from the group consisting of PVD (physical vapor deposition) treatment, CVD (chemical vapor deposition) treatment, spraying treatment (film formation by spraying), heat treatment under an ammonia gas atmosphere, and heat treatment under a nitrogen gas atmosphere.

Examples of the PVD treatment include ion plating, sputtering, and the like. Examples of the CVD treatment include thermal CVD treatment, plasma CVD treatment, laser CVD treatment, and the like. Examples of the spraying treatment include flame spraying, arc spraying, plasma spraying, laser spraying, and the like.

The heating temperature of the heat treatment under ammonia gas or nitrogen gas atmosphere is preferably 500°C or more, more preferably about 750 to 1,050°C, and even more preferably about 750°C to 950°C. It is preferable to heat a titanium material generally at about 500°C or more (preferably about 750°C or more) under a nitrogen gas atmosphere.

The heat treatment under an ammonia gas or nitrogen gas atmosphere is preferably performed in the presence of an oxygen-trapping agent.

It is particularly preferable to form titanium nitride by performing heat treatment under a nitrogen gas atmosphere in the presence of an oxygen-trapping agent.

The oxygen-trapping agent used in the heat treatment of a titanium material is, for example, a substance or gas having a higher oxygen affinity than that of the titanium material. For example, a carbon material, metal powder, hydrogen gas, etc., can be preferably used. These oxygen-trapping agents may be used singly or in a combination of two or more.

Examples of carbon materials include, but are not particularly limited to, graphite carbon, amorphous carbon, carbon having an intermediate crystal structure between graphite carbon and amorphous carbon, and the like. The carbon material may have any shape, such as plate, foil, or powder. It is preferable to use a plate carbon material, in terms of handling properties, and because the thermal strain of the titanium material during heat treatment can be prevented.

Examples of metal powders include, but are not particularly limited to, metal powders of titanium, a titanium alloy, chromium, a chromium alloy, molybdenum, a molybdenum alloy, vanadium, a vanadium alloy, tantalum, a tantalum alloy, zirconium, zirconium, a zirconium alloy, silicon, a silicon alloy, aluminum, an aluminum alloy, or the like. It is preferable to use a metal powder of titanium, a titanium alloy, chromium, a chromium alloy, zirconium, a zirconium alloy, aluminum, an aluminum alloy, or the like, because their oxygen affinity is high. The most preferable metal powder is a metal powder of titanium particles or a titanium alloy. These metal powders may be used singly or in a combination of two or more.

The average particle diameter of the metal powder is preferably about 0.1 to 1,000 µm, more preferably about 0.1 to 100 µm, and even more preferably about 0.1 to 10 µm.

The conditions for using an oxygen-trapping agent in an ammonia gas or nitrogen gas atmosphere can be suitably determined depending on the type and shape of the oxygen-trapping agent. For example, when a carbon material or metal powder is used as the oxygen-trapping agent, a titanium material is brought into contact with the carbon material or metal powder so that the surface of the titanium material is covered with the carbon material or metal powder. Then, the titanium material is heated in an ammonia gas or nitrogen gas atmosphere. Alternatively, when hydrogen gas is used as the oxygen-trapping agent, the titanium material is heated while hydrogen gas is introduced under an ammonia gas or nitrogen gas atmosphere.

The heat treatment can be performed in an atmosphere of ammonia gas, nitrogen gas, or a mixed gas of ammonia gas and nitrogen gas. It is most preferable to use nitrogen gas, in terms of convenience, profitability, and safety.

The reaction pressure of the heat treatment under an ammonia gas or nitrogen gas atmosphere is about 0.01 to 100 MPa, preferably about 0.1 to 10 MPa, and more preferably about 0.1 to 1 MPa. The heat treatment is preferably performed under a nitrogen gas atmosphere.

The heating time of the heat treatment under an ammonia gas or nitrogen gas atmosphere is preferably about 1 minute to 12 hours, more preferably about 10 minutes to 8 hours, and even more preferably about 1 hour to 6 hours. It is preferable to heat the titanium material for this period of time.

When a titanium material is heated under an ammonia gas or nitrogen gas atmosphere, it is preferable, in order to efficiently form titanium nitride on the surface of the titanium material, to reduce the pressure in the furnace for heat treatment using a rotary-type vacuum pump and optionally a mechanical booster pump or an oil diffusion pump, and to reduce the concentration of oxygen remaining in the furnace for heat treatment (in the nitriding furnace). Titanium nitride can be efficiently formed on the surface of the titanium material by reducing the pressure in the furnace for heat treatment to preferably about 10 Pa or less, more preferably about 1 Pa or less, and even more preferably about 0.1 Pa or less.

Titanium nitride can be efficiently formed on the surface of a titanium material by supplying ammonia gas, nitrogen gas, or a mixed gas of ammonia gas and nitrogen gas, into the decompressed furnace to return the pressure in the furnace, and heating the titanium material. The heating temperature, heating time, and other conditions of the heat treatment using this furnace may be the same as the above-mentioned conditions. As the gas composition, it is most preferable to use nitrogen gas, in terms of convenience, profitability, and safety.

Titanium nitride can be more efficiently formed on the surface of a titanium material by alternately repeating (several times) the decompression treatment that reduces the remaining oxygen concentration in the furnace for heat treatment, and the pressure-returning treatment that supplies nitrogen gas, etc., into the furnace. Furthermore, titanium nitride can be more efficiently formed on the surface of a titanium material by performing decompression treatment in the presence of an oxygen-trapping agent, and heat treatment under a gas atmosphere, such as ammonia gas or nitrogen gas.

The type of titanium nitride formed on the surface of a titanium material is not particularly limited. Examples thereof include TiN, Ti₂N, α-TiN_{0.3}, η-Ti₃N_{2-X}, ξ-Ti₄N_{3-X} (provided that X is 0 or more and less than 3), mixtures thereof, amorphous titanium nitride, and the like. Preferred among these are TiN, Ti₂N, and mixtures thereof; more preferred are TiN, and a mixture of TiN and Ti₂N; and particularly preferred is TiN.

As the means for forming titanium nitride in the present invention, one of the above methods may be used singly, or two or more of them may be used in combination. Of the above methods for forming titanium nitride, heat treatment of a titanium material under a nitrogen gas atmosphere is preferred in terms of convenience, mass production, or production cost.

### Step (2) of Surface Treatment Method A

In surface treatment method A, the titanium material with titanium nitride formed on the surface thereof is anodized using an electrolyte solution that has an etching effect on titanium at a voltage higher than the spark discharge generating voltage, thereby forming an anatase-type titanium oxide film (step (2)). The produced photoelectrode substrate has an anatase-type titanium oxide-containing semiconductor layer on the surface thereof. An anatase-type titanium oxide film can be suitably formed by performing anodization. Due to the formation of an anatase-type titanium oxide film, high photoelectric conversion efficiency can be suitably exhibited.

In the surface treatment using a method of applying a voltage higher than the spark discharge generating voltage, an electrolyte solution that has an etching effect on titanium materials is preferably used. The electrolyte solution preferably contains an inorganic acid and/or organic acid that have an etching effect on titanium. The electrolyte solution preferably further contains hydrogen peroxide. It is preferable to perform anodization by applying a voltage higher than the spark discharge generating voltage.

As the electrolyte solution, it is preferable to use an aqueous solution containing an inorganic acid and/or organic acid that have an etching effect on titanium materials. Examples of the inorganic acid that has an etching effect on titanium materials include sulfuric acid, hydrofluoric acid, hydrochloric acid, nitric acid, aqua regia, and the like. Examples of the organic acid that has an etching effect on titanium include oxalic acid, formic acid, citric acid, trichloroacetic acid, and the like. These acids may be used singly, or in a combination of any two or more regardless of whether they are organic acids or inorganic acids.

A preferable embodiment of an electrolyte solution containing two or more acids is, for example, an aqueous solution containing sulfuric acid and optionally phosphoric acid. Although the proportion of the acids in this electrolyte solution varies depending on the type of acid used, anodization conditions, and other conditions, the total amount of the acids is generally 0.01 to 10 M, preferably 0.1 to 10 M, and more preferably 1 to 10 M. An example of an electrolyte solution containing sulfuric acid and phosphoric acid is an electrolyte solution containing 1 to 8 M sulfuric acid and 0.1 to 2 M phosphoric acid.

The electrolyte solution preferably contains hydrogen peroxide, in addition to the above organic acid and/or inorganic acid. The electrolyte solution containing hydrogen peroxide allows more efficient production of an anatase-type titanium oxide film. When the electrolyte solution contains hydrogen peroxide, the proportion of hydrogen peroxide is not particularly limited, but is, for example, 0.01 to 5 M, preferably 0.01 to 1 M, and more preferably 0.1 to 1 M.

A preferable embodiment of the electrolyte solution used in the anodization is, for example, an aqueous solution containing 1 to 8 M sulfuric acid, 0.1 to 2 M phosphoric acid, and 0.1 to 1 M hydrogen peroxide.

An anatase-type titanium oxide film is obtained by immersing a titanium material in the above electrolyte solution, and performing anodization by applying a constant current so that a voltage higher than the spark discharge generating voltage is applied. For example, the voltage higher than the spark discharge generating voltage is generally 100 V or more, and preferably 150 V or more.

The anodization can be performed, for example, by increasing the voltage to the above spark discharge generated voltage at a constant rate, and applying a constant voltage for a certain period of time at a voltage higher than the spark discharge generating voltage. The rate of increasing the voltage to the spark discharge generating voltage is generally 0.01 to 1 v/sec, preferably 0.05 to 0.5 v/sec, and more preferably 0.1 to 0.5 v/sec. Moreover, the time for applying a voltage higher than the spark discharge generating voltage is generally 1 minute or more, preferably 1 to 60 minutes, and more preferably 10 to 30 minutes.

The anodization by spark discharge can also be performed by controlling the current, in place of controlling the voltage. The current density in the anodization may be 0.1 A/dm² or more, but is preferably 1 A/dm² to 10 A/dm², in terms of profitability, convenience, and performance.

According to the above method, an anatase-type titanium oxide-containing film having a film thickness of about 1 to 100 µm can be obtained.

### Step (2) of Surface Treatment Method B

In surface treatment method B, the titanium material with titanium nitride formed on the surface thereof is anodized in an electrolyte solution that does not have an etching effect on titanium (step (2)). Then, the anodized titanium material is heated in an oxidizing atmosphere, thereby forming an anatase-type titanium oxide film (step (3)). The produced photoelectrode substrate has an anatase-type titanium oxide-containing semiconductor layer on the surface thereof, and suitably exhibits high photoelectric conversion efficiency.

The electrolyte solution preferably contains at least one acid selected from the group consisting of inorganic acids and organic acids that do not have an etching effect on titanium, or a salt compound thereof. An amorphous titanium oxide film can be formed on the surface of the titanium material with titanium nitride formed on the surface thereof, by anodizing the titanium material in an electrolyte solution that does not have an etching effect on titanium.

The electrolyte solution that does not have an etching effect on titanium is preferably an electrolyte solution containing at least one compound selected from the group consisting of inorganic acids, organic acids, and salts thereof (hereafter also referred to as "an inorganic acid or the like"). The electrolyte solution containing an inorganic acid or the like is preferably a dilute aqueous solution of phosphoric acid, phosphate, or the like.

Only performing step (2) of anodization in surface treatment method B does not generate spark discharges, and crystalline titanium oxide, such as anatase-type titanium oxide, is not generally formed. Anatase-type titanium oxide can be formed from amorphous titanium oxide in the subsequent heat treatment step under an oxidizing atmosphere. Therefore, because an amorphous titanium oxide film is effectively formed on the surface of the titanium material, it is preferable to anodize the titanium material with titanium nitride formed on the surface thereof.

The electrolyte solution that does not have an etching effect on titanium is preferably an electrolyte solution containing at least one compound (inorganic acid, etc.) selected from the group consisting of inorganic acids (phosphoric acid, etc.), organic acids, and salts thereof (phosphate etc.).

The inorganic acid that does not have an etching effect on titanium is preferably phosphoric acid, carbonic acid, or the like, in terms of convenience, profitability, safety, etc. The organic acid that does not have an etching effect on titanium is preferably acetic acid, adipic acid, lactic acid, or the like. Salts of these acids, such as sodium dihydrogenphosphate, disodium hydrogenphosphate, sodium hydrogencarbonate, sodium acetate, potassium adipate, and sodium lactate, can also be used.

In addition, it is preferable to use an electrolyte solution containing an electrolyte, such as sodium sulfate, potassium sulfate, magnesium sulfate, sodium nitrate, potassium nitrate, magnesium nitrate, or calcium nitrate.

The electrolyte solution that does not have an etching effect on titanium is preferably an electrolyte solution containing at least one compound (inorganic acid, etc.) selected from the group consisting of inorganic acids (phosphoric acid, etc.), organic acids, and salts thereof (phosphate etc.). The most preferable inorganic acids, etc., are phosphoric acid and phosphate.

The electrolyte solution is preferably a dilute aqueous solution of an inorganic acid, or the like. The concentration of the inorganic acid or the like in the electrolyte solution is preferably about 1 wt.%, in terms of profitability, etc. For example, in an electrolyte solution containing phosphoric acid, the concentration of the phosphoric acid is preferably about 0.01 to 10 wt.%, more preferably about 0.1 to 10 wt.%, and even more preferably about 1 to 3 wt.%.

These acids may be used singly, or in a combination of any two or more regardless of whether they are organic acids or inorganic acids. A preferable embodiment of an electrolyte solution containing two or more acids is, for example, an aqueous solution containing phosphate and phosphoric acid. Although the proportion of the acids in this electrolyte solution varies depending on the type of acid and acid salt used, anodization conditions, and other conditions, the total amount of the acids is generally 0.01 to 10 wt.%, preferably 0.1 to 10 wt.%, and more preferably 1 to 3 wt.%.

The titanium material with titanium nitride formed on the surface thereof obtained in the step of forming titanium nitride is immersed in a dilute electrolyte solution containing an inorganic acid or the like that does not have an etching effect on titanium. Subsequently, anodization is performed by preferably applying a voltage of about 10 to 300 V. It is more preferable to perform anodization at a voltage of about 50 to 300 V, and even more preferably about 50 to 200 V.

The anodization treatment temperature is preferably about 0 to 80°C, in terms of convenience, profitability, safety, etc. It is more preferable to perform anodization at a temperature of about 10 to 50°C, and even more preferably about 20 to 30°C.

The anodization treatment time is preferably about 1 second to 1 hour. It is more preferable to perform anodization for about 10 seconds to 30 minutes, and even more preferably about 5 minutes to 20 minutes.

### Step (3) of Surface Treatment Method B

Next, the titanium material with a titanium oxide film formed on the surface thereof is heated in an oxidizing atmosphere, thereby forming an anatase-type titanium oxide film (Step (3)).

When the metal titanium material, etc., is only heated in an oxidizing atmosphere, rutile-type titanium dioxide is formed, but anatase-type titanium oxide is not sufficiently formed.

The titanium material with titanium nitride formed thereon and with a titanium oxide film (amorphous titanium oxide film) formed thereon (titanium material after anodization) is heated in an oxidizing atmosphere (air oxidation treatment, etc.), thereby forming an anatase-type titanium oxide film, which has excellent photocatalytic characteristics and photoelectric transfer characteristics among crystalline titanium oxides. As a result, the titanium material after heat treatment has excellent photoelectric transfer characteristics.

The oxidizing atmosphere in which heat treatment is performed may be selected from an air oxidizing atmosphere, an atmosphere of a mixture of oxygen gas and nitrogen gas having any oxygen concentration, an oxygen gas atmosphere, and the like; however, heat treatment in an air oxidizing atmosphere is preferred in terms of convenience, profitability, safety, etc.

The temperature of the heat treatment in an oxidizing atmosphere is preferably about 300°C or more, because of the efficient conversion from amorphous titanium oxide to anatase-type titanium oxide. The temperature of the heat treatment in an oxidizing atmosphere is preferably about 800°C or less, in order to prevent a phase transition from anatase-type titanium oxide to rutile-type titanium dioxide. This is because the photoelectric transfer characteristics of rutile-type titanium dioxide are inferior to those of anatase-type titanium oxide. The temperature of the heat treatment in an oxidizing atmosphere is more preferably about 300 to 800°C, even more preferably about 300 to 700°C, and particularly preferably about 400 to 700°C.

The reaction pressure of the heat treatment is about 0.01 to 10 MPa, preferably about 0.01 to 5 MPa, and more preferably about 0.1 to 1 MPa.

The heating time of the heat treatment is preferably about 1 minute to 12 hours, more preferably about 10 minutes to 8 hours, and even more preferably about 1 to 6 hours.

The crystalline titanium oxide film is preferably an anatase-type titanium oxide film. Open-voltage values are improved by using anatase-type titanium oxide, rather than rutile-type titanium dioxide, in a photoelectrode of a dye-sensitized solar cell; thus, the photoelectric transfer characteristics are also high. The heat treatment after the anodization of the present invention results in the formation of a film containing a large amount of anatase-type titanium oxide having high photocatalytic activity.

The heat treatment allows the production of photoelectric conversion element materials in which a large amount of highly active anatase-type titanium oxide is formed on the surface of the titanium materials. The materials can also be used as photoelectric conversion element materials that achieve high conversion efficiency.

According to the above method, an anatase-type titanium oxide-containing film having a film thickness of about 1 to 100 µm can be obtained.

An excellent photoelectric conversion element material can be produced by forming titanium nitride on the surface of a titanium material, and incorporating, after the formation of titanium nitride and before the heat treatment in an oxidizing atmosphere, the step of performing anodization in an electrolyte solution, such as a dilute aqueous acid solution of phosphoric acid or the like that does not have an etching effect on titanium, or an aqueous solution of a salt of phosphoric acid or the like.

Due to the anatase-type titanium oxide (film) formed on their surface, the titanium materials can be used as photoelectric conversion element materials, such as photoelectrode substrates, of dye-sensitized solar cells, which have been attracting attention as next-generation solar cells.

### Titanium Oxide Layer

In the photoelectrode, a titanium oxide layer (semiconductor layer) containing a dye sensitizing agent is formed on a titanium material (a material selected from the group consisting of metal titanium, titanium alloys, surface-treated metal titanium, and surface-treated titanium alloys).

The semiconductor layer may be formed as an anatase-type titanium oxide film prepared by the above surface treatment method A or B. Further, a titanium oxide layer can be formed by the step of performing heat treatment under an oxidizing atmosphere after applying a paste agent containing particles of titanium oxide, etc.

The average particle diameter of titanium oxide particles is preferably about 0.1 to 3,000 nm, more preferably about 1 to 1,000 nm, and even more preferably about 10 to 500 nm. It is not necessary to use a single titanium oxide particle powder, and a mixture of a powder having a small particle size and a powder having a large particle size allows light to be scattered in the titanium oxide layer; thus, the photoelectric conversion efficiency of the obtained dye-sensitized solar cell can be improved.

The paste agent is prepared by, for example, dispersing titanium oxide particles in a solvent. The solvent is preferably polyethylene glycol. The content of titanium oxide particles in the paste agent is not particularly limited, and may be appropriately adjusted so that a sintered body is suitably formed.

The method for applying a paste agent to the titanium material is not particularly limited. For example, screen printing, inkjet printing, roll coating, doctor blading, spray coating, etc., can be used.

The thickness of the coating film after applying the paste agent is not particularly limited, and may be suitably determined so that a titanium oxide sintered body having a desired thickness is formed.

The titanium oxide layer is preferably applied in a rectangular shape. The titanium oxide layer applied in a rectangular shape, rather than a square shape, improves photoelectric conversion efficiency, without disappearance of electrons in the titanium oxide layer due to light excitation by the dye sensitizing agent.

When the photoelectrode substrate is a surface-treated metal titanium material or titanium alloy material, a laminate of the titanium oxide sintered body and the titanium oxide film is obtained as the titanium oxide layer.

The temperature of the heat treatment (firing temperature) is preferably about 100 to 900°C, more preferably about 200 to 800°C, and even more preferably about 300 to 600°C. Moreover, the temperature is more preferably about 300 to 900°C, even more preferably about 400 to 800°C, and still more preferably about 400 to 700°C. In particular, the titanium oxide particles can be suitably sintered together by heat treatment (firing) at a temperature of about 400 to 500°C. Further, fractures and cracks of the titanium oxide layer, and a crystalline transition from anatase-type titanium oxide to rutile-type titanium dioxide in the titanium oxide layer can be prevented.

In the dye-sensitized solar cell, metal titanium or surface-treated metal titanium is used as the photoelectrode substrate, and a titanium oxide layer is formed on the photoelectrode substrate, thereby improving photoelectric conversion efficiency and generating high electrical power.

The time of the heat treatment may be suitably determined depending on the heat treatment temperature, etc. The heat treatment is performed in an oxidizing atmosphere (in an atmosphere in which oxygen is present; e.g., in the air).

### Dye Sensitizing Agent

In the photoelectrode, a titanium oxide layer containing a dye sensitizing agent is formed on a titanium material.

The photoelectrode on which a titanium oxide layer (semiconductor layer) is formed by the above method is immersed in a solution containing a dye sensitizing agent, thereby allowing the dye sensitizing agent to be adsorbed to the titanium oxide layer.

The dye sensitizing agent is not particularly limited, as long as it is dye that can absorb light in the near-infrared light region and the visible light region. Preferred dye sensitizing agents are ruthenium metal complexes, such as red dye (N719) and black dye (N749); metal complexes other than ruthenium, such as copper phthalocyanine; organic complexes, such as eosine, rhodamine, merocyanine, and indoline; and the like. These dye sensitizing agents can be used singly or in a combination of two or more. Among the dye sensitizing agents, ruthenium complexes are preferred, and a mixture of red dye (N719) and black dye (N749), which can absorb light in the near-infrared light region, is more preferred.

The dye sensitizing agent can be adsorbed to the titanium oxide layer by, for example, immersing the semiconductor layer, such as a titanium oxide layer, in a solution containing the dye sensitizing agent. The dye sensitizing agent can be attached to the semiconductor layer by chemical adsorption, physical adsorption, or deposition.

The amount of dye sensitizing agent attached may be suitably determined depending on the area of the semiconductor layer, etc., within a range that does not impair the effect of the present invention.

### (2) Counter Electrode

The counter electrode of the dye-sensitized solar cell is obtained by coating an electrochemical-reduction catalyst layer on transparent conductive glass or a transparent conductive film. The transparent conductive glass or transparent conductive film is obtained by coating a transparent conductive film, such as ITO (indium tin oxide) or FTO (fluorine tin oxide), onto transparent glass or a transparent plastic material, such as PET (polyethylene terephthalate) or PEN (polyethylene naphthalate). A counter electrode in which an electrochemical-reduction catalyst layer is coated on the surface of transparent conductive glass or a transparent conductive film on the electrolyte side by PVD treatment, such as electron beam evaporation or sputtering, is used.

The electrochemical-reduction catalyst layer may be a platinum catalyst layer, a carbon layer, a poly(3,4-ethylenedioxythiophene) (PEDOT) layer, a gold layer, a silver layer, a copper layer, an aluminum layer, a rhodium layer, an indium layer, or the like. The electrochemical-reduction catalyst layer is preferably a platinum catalyst layer because, for example, hydrogen overvoltage is low and electrons are easily injected into the electrolyte that has lost electrons in the electrolyte layer.

Since the photoelectrode of the present invention is made of a titanium material that does not transmit light, light is irradiated from the counter electrode side. Since light transparency increases as the thickness of the platinum coating film on the counter electrode is thinner, coating with several nm or less is preferred. When the coating film thickness is overly thin, electrons are less likely to be injected into the electrolyte that has lost electrons in the electrolyte solution, and the photoelectric conversion efficiency of the obtained dye-sensitized solar cell is thus reduced. Accordingly, the thickness of the platinum layer is more preferably about 0.5 to 1 nm.

In order to increase the amount of light entering the dye-sensitized solar cell, an antireflection film is formed on the light irradiation surface of transparent conductive glass or a transparent conductive film, which serves as the counter electrode, by a method such as dry treatment (e.g., vacuum deposition or sputtering), spin coating, or dip coating, using MgF₂ or SiO₂; or an antireflection film is attached to the light irradiation surface. As a result, the photoelectric conversion efficiency of the obtained dye-sensitized solar cell is improved.

### (3) Electrolyte Layer

The electrolyte layer may be a layer that can be excited by light, supply electrons to the dye sensitizing agent achieving electron injection into the semiconductor layer, and reduce the dye sensitizing agent. The electrolyte layer may also be a layer in which electrons are supplied from the platinum catalyst layer of the counter electrode to the electrolyte that has lost electrons.

A liquid electrolyte layer is, for example, a nonaqueous electrolyte solution containing a redox species. Preferred examples of the redox species include a combination of iodine and an iodide salt, such as lithium iodide, sodium iodide, potassium iodide, or calcium iodide; and a combination of bromine and a bromide salt, such as lithium bromide, sodium bromide, potassium bromide, or calcium bromide. These may be used singly or in a combination of two or more. Further, DMPII (1,2-dimethyl-3-propylimidazolium iodide), TBP (tert-butylpyridine), etc., may be added.

Examples of the solvent include acetonitrile, 3-methoxy propionitrile, ethylene carbonate, propione carbonate, and the like. These solvents may be used singly or in a combination of two or more. In the dye-sensitized solar cell of the present invention, the dye adsorbed to the titanium oxide layer on the photoelectrode is irradiated with light via a light-concentrating device, the counter electrode material, and the electrolyte solution layer to excite the dye by the light; thus, the electrolyte solution layer is required to have high light transparency. The thickness of the electrolyte layer, that is, the distance between the photoelectrode and the counter electrode, is preferably 25 to 100 µm, and more preferably 25 to 50 µm.

### Separator (Spacer) and Sealing Material

In the dye-sensitized solar cell, a separator (spacer) is preferably disposed so as to prevent contact between the photoelectrode and the counter electrode.

The thickness of the separator (spacer) disposed between the photoelectrode and the counter electrode determines the thickness of the electrolyte solution layer. In the dye-sensitized solar cell of the present invention, as the thickness of the electrolyte solution layer is thinner, the dye adsorbed to the titanium oxide layer on the photoelectrode is more irradiated with light via a light-concentrating device, the counter electrode material, and the electrolyte solution layer to excite the dye by the light; thus, the electrolyte solution layer is required to have high light transparency, and the thickness of the electrolyte solution layer is preferably thin. A separator (spacer) that is too thin allows contact between the photoelectrode and the counter electrode. The thickness of the separator (spacer) is preferably 25 to 100 µm, and more preferably 25 to 50 µm. As the separator, a known separator generally used in the field of cells can be used. The separator may be an ionomer resin film, polyimide resin film, UV-cured acrylic resin, glass material, silane-modified polymer, polyimide tape, or the like.

The area of the separator is not particularly limited, and may be suitably determined depending on the scale of the target solar cell, etc.

Examples of the sealing material include UV-cured acrylic resin, ionomer resin films, epoxy resin, polyester resin, acrylic resin, hot melt resin, silicone elastomers, butyl rubber elastomers, glass materials, and the like. TB3017B (produced by ThreeBond) can be used as the UV-cured acrylic resin. The sealing material can seal the gap between the photoelectrode and the counter electrode.

### (4) Light-Concentrating Device

In the present dye-sensitized solar cell, a light-concentrating device is disposed on the counter electrode side.

A light irradiation means is disposed on the counter electrode side via the light-concentrating device. Since the photoelectrode of the dye-sensitized solar cell is made of a titanium material that does not transmit light, light is irradiated from the counter electrode side. The light-concentrating device disposed between the counter electrode and the light source concentrates wastefully used light, achieving high electrical power that corresponds to high photoelectric conversion efficiency.

Conventional dye-sensitized solar cells using transparent conductive films, such as ITO (indium tin oxide) and FTO (fluorine tin oxide), have high sheet resistance. In particular, the photoelectric conversion efficiency of dye-sensitized solar cells with a large area is not improved even when light is converged by a light-concentrating device.

On the other hand, the metal titanium, titanium alloy, surface-treated metal titanium material, or surface-treated titanium alloy material used in the photoelectrode of the present invention has advantages in that it has significantly lower sheet resistance than transparent conductive films, such as ITO (indium tin oxide) and FTO (fluorine tin oxide). Therefore, even when the dye-sensitized solar cell of the present invention has a large area, electrical power corresponding to the photoelectric conversion efficiency of the dye-sensitized solar cell can be obtained by converging light using a light-concentrating device.

The light-concentrating device is not particularly limited; however, it is preferable to use glass or a condenser lens, such as a transparent plastic linear Fresnel lens (e.g., PMMA (polymethyl methacrylate), PET (polyethylene terephthalate), or PEN (polyethylene naphthalate)).

Incident light can be converged by a light-concentrating device, such as a condenser lens. The condensing rate when incident light is converged by a light-concentrating device can be determined from the current value, etc., during the convergence of light, using a silicon standard cell. The condensing rate when incident light is not converged and is directly used is regarded as 100% (no light condensed). The condensing rate when light is converged by a light-concentrating device (light condensed) is preferably about 110 to 5,000%, more preferably about 200 to 4,000%, even more preferably about 300 to 3,000%, and particularly preferably about 500 to 900%. For example, a condensing rate of 500% means that the original incident light is converged 5 times by a light-concentrating device.

In the dye-sensitized solar cell, metal titanium or surface-treated metal titanium is used as the photoelectrode substrate, and further a light-concentrating device is used to converge (condense) incident light at the above condensing rate, thereby improving apparent photoelectric conversion efficiency, and generating high electrical power.

Organic components, including the dye sensitizing agent, used in the dye-sensitized solar cell may be deteriorated by short-wavelength ultraviolet rays contained in sunlight. Therefore, a light-concentrating device, such as glass or a transparent plastic linear Fresnel lens (e.g., PMMA (polymethyl methacrylate), PET (polyethylene terephthalate), or PEN (polyethylene naphthalate)), can be used to prevent the entrance of short-wavelength ultraviolet rays contained in sunlight into the dye-sensitized solar cell. The deterioration of organic components, including dye, used in the dye-sensitized solar cell can be prevented, and the durability of the dye-sensitized solar cell can be improved.

Moreover, since the dye-sensitized solar cell itself has heat generated by the convergence of light by a light-concentrating device, the durability of the dye-sensitized solar cell may be impaired. It is therefore preferable to provide a cooling system.

The cooling system is not particularly limited; however, in order to block the heat energy of sunlight between the light-concentrating device and the counter electrode, it is preferable to use, for example, a device provided with a near-infrared cut filter, a device for water-cooling or air-cooling the metal titanium and titanium alloy, or surface-treated metal titanium and surface-treated titanium alloys used in the photoelectrode, or a material with high thermal conductivity, such as a copper plate. Providing such a cooling system can prevent heat generation caused by light converged by a light-concentrating device. In order to further raise cooling efficiency, two or more highly thermally-conductive materials (aluminum, copper plate, etc.) may be laminated onto the photoelectrode surface of the dye-sensitized solar cell of the present invention.

### (5) Method for Producing Dye-Sensitized Solar Cell

The dye-sensitized solar cell of the present invention can be produced by a known method. For example, a photoelectrode and a counter electrode are disposed opposite to each other via a spacer, and an electrolyte layer is sealed between the photoelectrode and the counter electrode.

Th method for sealing the electrolyte layer is not limited. For example, after the counter electrode is laminated on the semiconductor layer side of the photoelectrode, an inlet is provided, and a material constituting the electrolyte layer is injected through the inlet. The inlet may be sealed with a predetermined member or resin after the injection of the material is completed. Moreover, when the electrolyte layer is a gel, it may be liquefied by heating when the above material is injected. When the electrolyte layer is solid, for example, a solution in which the solid electrolyte is dissolved is prepared using a solvent that can dissolve the solid electrolyte, the solution is injected into the inlet, and the solvent is then removed.

The dye-sensitized solar cell of the present invention is a next-generation solar cell with high photoelectric conversion efficiency. The dye-sensitized solar cell of the present invention can have a module form comprising a plurality of cells.

Fig. 1 is a schematic view (cross-sectional view) showing one embodiment of the dye-sensitized solar cell of the present invention. The dye-sensitized solar cell of Fig. 1 is a dye-sensitized solar cell in which a photoelectrode and a counter electrode are disposed opposite to each other via an electrolyte layer.

The photoelectrode comprises a titanium material 1 and a semiconductor layer 2 containing a dye sensitizing agent formed on the titanium material 1. The counter electrode is transparent conductive glass 3. An electrochemical catalyst layer (an electrochemical-reduction catalyst layer) 4 is vapor-deposited on the counter electrode. An electrolyte 5 is disposed between the photoelectrode and the counter electrode. A spacer 6 is placed in the gap between the photoelectrode and the counter electrode, and the gap is sealed with a sealing material 7.

A light-concentrating device 8 is disposed in the upper portion of the counter electrode, and an antireflection film 9 is provided on the light irradiation surface of the counter electrode.

### Examples

The present invention is described below with reference to Examples; however, the present invention is not limited to these Examples.

### Example 1

### (1) Production of Anodized Titanium Material

A metal titanium plate (titanium material, photoelectrode substrate) was degreased with trichloroethylene. Using a nitriding furnace (NVF-600-PC, produced by Nakanihon-Ro Kogyo Co., Ltd.), titanium nitride was formed on the surface of the degreased metal titanium plate.

First, the metal titanium plate was held by a plate carbon material placed in the nitriding furnace. Subsequently, in order to remove oxygen, the pressure in the nitriding furnace was reduced to 1 Pa or less, and then high-purity (99.99%) nitrogen gas was introduced into the nitriding furnace to return the pressure to 0.1 MPa (atmospheric pressure). Then, the temperature of the nitriding furnace was raised to 950°C for 2 hours. Thereafter, heat treatment was performed in the nitriding furnace at 950°C for 1 hour, thereby forming titanium nitride on the surface of the metal titanium plate.

The metal titanium plate with titanium nitride formed on the surface thereof was anodized with 1.5 M sulfuric acid, 0.05 M phosphoric acid, and 0.3 M hydrogen peroxide at a current density of 4 A/dm² for 30 minutes. Thus, an anatase-type titanium oxide film was formed.

### (2) Production of Photoelectrode

A dye-sensitized solar cell was produced using the above surface-treated metal titanium plate (12 mm x 50 mm) as a photoelectrode.

First, the surface-treated metal titanium plate was washed with a solvent, and then an oxygen flow was applied (0.05 MPa, 5 min) in a UV ozone cleaner (UV253S, produced by Filgen, Inc.). After ultraviolet irradiation for 30 minutes, a nitrogen flow was further applied (0.2 MPa, 7.5 min).

After this treatment, the surface-treated material was coated three times with a titanium oxide material (PST-18NR, produced by JGC Catalysts and Chemicals Ltd.) by a squeegee method so that the coated area was 2 cm² (5 mm x 40 mm) to form a semiconductor layer, followed by firing at 450°C for 1 hour. Further, an oxygen flow was applied (0.05 MPa, 5 min) in a UV ozone cleaner (UV253S, produced by Filgen, Inc.). After ultraviolet irradiation for 30 minutes, a nitrogen flow was further applied (0.2 MPa, 7.5 min).

Subsequently, 0.45 mM ruthenium-based dye N719 (dye sensitizing agent, produced by Solaronix) and 0.15 mM ruthenium-based dye N749 (dye sensitizing agent, produced by Solaronix) were diluted in a mixture of tert-butanol (t-BtOH) and acetonitrile (CH₃CN) to prepare a dye solution. The mixing ratio of t-BtOH to CH₃CN in the mixture was 1:1. The metal titanium plate after firing was immersed in the dye solution at 40°C for 14 hours, thereby obtaining a photoelectrode material.

The same operation was performed on a non-surface-treated metal titanium material, and an FTO (fluorine tin oxide)-coated glass plate (produced by Asahi Glass Co., Ltd.) used in a conventional dye-sensitized solar cell, thereby preparing photoelectrodes.

The surface-treated metal titanium was subjected to etching treatment by immersion in a 5% hydrofluoric acid solution for 5 minutes, thereby providing a collecting part. The metal titanium was not subjected to the treatment to provide a collecting part. The FTO (fluorine tin oxide)-coated glass plate was coated with silver paste (Dotite D-550, produced by Fujikurakasei Co., Ltd.), thereby providing a collecting part.

### (3) Production of Dye-Sensitized Solar Cell

The counter electrode used was a material (12 x 50 mm) obtained by electron-beam deposition of platinum on an FTO (fluorine tin oxide)-coated glass plate (produced by Asahi Glass Co., Ltd.). A collecting part was provided by coating the material with silver paste (Dotite D-550, produced by Fujikurakasei Co., Ltd.). The thickness of the deposited platinum was 1 nm. A 30-µm-thick ionomer resin spacer (Himilan, produced by Dupont-Mitsui Polychemicals Co., Ltd.) was placed in the gap between the photoelectrode and the counter electrode. An antireflection film (produced by Hori Co., Ltd.) was attached to the light irradiation surface of the counter electrode.

Then, 0.01 M I₂ (iodine), 0.02 M LiI (lithium iodide), 0.24 M DMPII (1,2-dimethyl-3-propylimidazolium iodide), and 1.0 M TBP (tert-butylpyridine) were dissolved in acetonitrile to prepare an electrolyte solution. The prepared electrolyte solution was placed in the gap between the photoelectrode and the counter electrode to form an electrolyte layer.

Subsequently, the gap between both electrodes was sealed with a UV-cured acrylic resin (TB3017B, sealing material, produced by ThreeBond). Thus, dye-sensitized solar cells were produced.

A PMMA (polymethyl methacrylate) linear Fresnel lens (produced by Nihon Tokushu Kogaku Jushi Co., Ltd.) was used as the light-concentrating device (condenser lens) to converge incident light. The condensing rate when incident light was converged by the condenser lens was determined from the current value during the convergence of light, using a silicon standard cell (produced by Bunkoukeiki Co., Ltd.).

### (4) Evaluation Results

Table 1 shows the results of the examination of the apparent photoelectric conversion efficiency, which corresponds to the electrical power generated during light concentration, in the dye-sensitized solar cells using the surface-treated metal titanium, metal titanium, or FTO (fluorine tin oxide)-coated glass plate.

**Table 1**

| Condensing rate (%) | Type of photoelectrode | Photoelectric conversion efficiency (%) |
|---|---|---|
| 100 (No light condensed) | Anodized titanium | 5.25 |
| | Titanium | 4.12 |
| | FTO glass (Reference Example) | 4.40 |
| 470 (Light condensed) | Anodized titanium | 10.25 |
| | Titanium | 9.25 |
| | FTO glass (Reference Example) | 5.83 |

The results revealed that the photoelectric conversion efficiency of the FTO glass used in the photoelectrode substrate of the conventional dye-sensitized solar cell was not improved very much, even when the light was condensed.

On the other hand, as a result of condensing the light in the dye-sensitized solar cells using the metal titanium or surface-treated metal titanium of the present invention as the photoelectrode substrate, it was found that when the light was converged, photoelectric conversion efficiency was improved, and high electrical power was generated.

### Example 2

### (1) Production of Anodized Titanium Material

A metal titanium plate (titanium material, photoelectrode substrate) was degreased with trichloroethylene. Using a nitriding furnace (NVF-600-PC, produced by Nakanihon-Ro Kogyo Co., Ltd.), titanium nitride was formed on the surface of the degreased metal titanium plate.

First, the metal titanium plate was held by a plate carbon material placed in the nitriding furnace. Subsequently, in order to remove oxygen, the pressure in the nitriding furnace was reduced to 1 Pa or less, and then high-purity (99.99%) nitrogen gas was introduced into the nitriding furnace to return the pressure to 0.1 MPa (atmospheric pressure). Then, the temperature of the nitriding furnace was raised to 950°C for 2 hours. Thereafter, heat treatment was performed in the nitriding furnace at 950°C for 1 hour, thereby forming titanium nitride on the surface of the metal titanium plate.

The metal titanium plate with titanium nitride formed on the surface thereof was anodized with 1.5 M sulfuric acid, 0.05 M phosphoric acid, and 0.3 M hydrogen peroxide at a current density of 4 A/dm² for 30 minutes. Thus, an anatase-type titanium oxide film was formed.

### (2) Production of Photoelectrode

A dye-sensitized solar cell was produced using the above surface-treated metal titanium plate (17 mm x 50 mm) as a photoelectrode.

First, the surface-treated metal titanium plate was washed with a solvent, and then an oxygen flow was applied (0.05 MPa, 5 min) in a UV ozone cleaner (UV253S, produced by Filgen, Inc.). After ultraviolet irradiation for 30 minutes, a nitrogen flow was further applied (0.2 MPa, 7.5 min).

The surface-treated material after this treatment was coated three times with a titanium oxide material (PST-18NR, produced by JGC Catalysts and Chemicals Ltd.) by a squeegee method so that the coated area was 4 cm² (10 mm x 40 mm) to form a semiconductor layer, followed by firing at 450°C for 1 hour. Further, an oxygen flow was applied (0.05 MPa, 5 min) in a UV ozone cleaner (UV253S, produced by Filgen, Inc.). After ultraviolet irradiation for 30 minutes, a nitrogen flow was further applied (0.2 MPa, 7.5 min).

Subsequently, 0.45 mM ruthenium-based dye N719 (dye sensitizing agent, produced by Solaronix) and 0.15 mM ruthenium-based dye N749 (dye sensitizing agent, produced by Solaronix) were diluted in a mixture of tert-butanol (t-BtOH) and acetonitrile (CH₃CN) to prepare a dye solution. The mixing ratio of t-BtOH to CH₃CN in the mixture was 1:1. The fired metal titanium plate was immersed in the dye solution at 40°C for 14 hours, thereby obtaining a photoelectrode material. The same operation was performed on a non-surface-treated metal titanium material, and an FTO (fluorine tin oxide)-coated glass plate (produced by Asahi Glass Co., Ltd.) used in a conventional dye-sensitized solar cell, thereby preparing photoelectrodes.

The surface-treated metal titanium was subjected to etching treatment by immersion in a 5% hydrofluoric acid solution for 5 minutes, thereby providing a collecting part. The metal titanium was not subjected to the treatment to provide a collecting part.

The FTO (fluorine tin oxide)-coated glass plate was coated with silver paste (Dotite D-550, produced by Fujikurakasei Co., Ltd.), thereby providing a collecting part.

### (3) Production of Dye-Sensitized Solar Cell

The counter electrode used was a material (17 x 50 mm) obtained by the electron-beam deposition of platinum on an FTO (fluorine tin oxide)-coated glass plate (produced by Asahi Glass Co., Ltd.). A collecting part was provided by coating the material with silver paste (Dotite D-550, produced by Fujikurakasei Co., Ltd.). The thickness of the deposited platinum was 1 nm. A 30-µm-thick ionomer resin spacer (Himilan, produced by Dupont-Mitsui Polychemicals Co., Ltd.) was placed in the gap between the photoelectrode and the counter electrode. An antireflection film (produced by Hori Co., Ltd.) was attached to the light irradiation surface of the counter electrode.

Then, 0.01 M I₂ (iodine), 0.02 M LiI (lithium iodide), 0.24 M DMPII (1,2-dimethyl-3-propylimidazolium iodide), and 1.0 M TBP (tert-butylpyridine) were dissolved in acetonitrile to prepare an electrolyte solution. The prepared electrolyte solution was placed in the gap between the photoelectrode and the counter electrode to form an electrolyte layer.

Subsequently, the gap between both electrodes was sealed with a UV-cured acrylic resin (TB3017B, sealing material, produced by ThreeBond). Thus, dye-sensitized solar cells were produced.

A PMMA (polymethyl methacrylate) linear Fresnel lens (produced by Nihon Tokushu Kogaku Jushi Co., Ltd.) was used as the condenser lens to converge the incident light. The condensing rate when the incident light was converged by the condenser lens was determined from the current value during the convergence of light, using a silicon standard cell (produced by Bunkoukeiki Co., Ltd.).

### (4) Evaluation Results

Table 2 shows the results of an examination of the apparent photoelectric conversion efficiency, which corresponds to the electrical power generated during light concentration, in the dye-sensitized solar cells using the surface-treated metal titanium, metal titanium, or FTO (fluorine tin oxide)-coated glass plate.

**Table 2**

| Condensing rate (%) | Type of photoelectrode | Photoelectric conversion efficiency (%) |
|---|---|---|
| 100 (No light condensed) | Anodized titanium | 4.89 |
| | Titanium | 4.29 |
| | FTO glass (Reference Example) | 2.81 |
| 598 (Light condensed) | Anodized titanium | 9.39 |
| | Titanium | 9.33 |
| | FTO glass (Reference Example) | 3.54 |

The results revealed that the photoelectric conversion efficiency of the FTO glass used in the photoelectrode substrate of the conventional dye-sensitized solar cell was not improved very much, even when the light was condensed.

On the other hand, as a result of condensing the light in the dye-sensitized solar cells using the metal titanium or surface-treated metal titanium of the present invention as the photoelectrode substrate, it was found that when the light was converged, photoelectric conversion efficiency was improved, and high electrical power was generated.

### Example 3

### (1) Production of Anodized Titanium Material

A metal titanium plate (titanium material, photoelectrode substrate) was degreased with trichloroethylene. Using a nitriding furnace (NVF-600-PC, produced by Nakanihon-Ro Kogyo Co., Ltd.), titanium nitride was formed on the surface of the degreased metal titanium plate.

First, the metal titanium plate was held by a plate carbon material placed in the nitriding furnace. Subsequently, in order to remove oxygen, the pressure in the nitriding furnace was reduced to 1 Pa or less, and then high-purity (99.99%) nitrogen gas was introduced into the nitriding furnace to return the pressure to 0.1 MPa (atmospheric pressure). Then, the temperature of the nitriding furnace was raised to 950°C for 2 hours. Thereafter, heat treatment was performed in the nitriding furnace at 950°C for 1 hour, thereby forming titanium nitride on the surface of the metal titanium plate.

The metal titanium plate with titanium nitride formed on the surface thereof was anodized with 1.5 M sulfuric acid, 0.05 M phosphoric acid, and 0.3 M hydrogen peroxide at a current density of 4 A/dm² for 30 minutes. Thus, an anatase-type titanium oxide film was formed.

### (2) Production of Photoelectrode

Dye-sensitized solar cells were produced using the above surface-treated metal titanium plates as photoelectrodes.

First, the surface-treated metal titanium plates were each washed with a solvent, and then an oxygen flow was applied (0.05 MPa, 5 min) in a UV ozone cleaner (UV253S, produced by Filgen, Inc.). After ultraviolet irradiation for 30 minutes, a nitrogen flow was further applied (0.2 MPa, 7.5 min). After this treatment, the surface-treated materials (9 x 50 mm, 10 x 50 mm, 12 mm x 50 mm, and 17 mm x 50 mm) were coated three times with a titanium oxide material (PST-18NR, produced by JGC Catalysts and Chemicals Ltd.) by a squeegee method so that the coated areas were 0.8 cm² (2 mm x 40 mm), 1.2 cm² (3 mm x 40 mm), 2.0 cm² (5 mm x 40 mm), and 4.0 cm² (10 mm x 40 mm), respectively, to form semiconductor layers. UV ozone treatment was further performed for 30 minutes, followed by firing at 450°C for 1 hour. Further, an oxygen flow was applied (0.05 MPa, 5 min) in a UV ozone cleaner (UV253S, produced by Filgen, Inc.). After ultraviolet irradiation for 30 minutes, a nitrogen flow was further applied (0.2 MPa, 7.5 min).

Subsequently, 0.45 mM ruthenium-based dye N719 (dye sensitizing agent, produced by Solaronix) and 0.15 mM ruthenium-based dye N749 (dye sensitizing agent, produced by Solaronix) were diluted in a mixture of tert-butanol (t-BtOH) and acetonitrile (CH₃CN) to prepare a dye solution. The mixing ratio of t-BtOH to CH₃CN in the mixture was 1:1. The fired metal titanium plates were each immersed in the dye solution at 40°C for 14 hours, thereby obtaining photoelectrode materials. The surface-treated metal titanium (the photoelectrode materials) was immersed in a 5% hydrofluoric acid solution for 5 minutes, thereby providing a collecting part.

### (3) Production of Dye-Sensitized Solar Cell

The counter electrode used was a material having the same area as that of a photoelectrode substrate obtained by electron-beam deposition of platinum on an FTO (fluorine tin oxide)-coated glass (produced by Asahi Glass Co., Ltd.). A collecting part was provided by coating the material with silver paste (Dotite D-550, produced by Fujikurakasei Co., Ltd.). The thickness of the deposited platinum was 1 nm. A 30-µm-thick ionomer resin spacer (Himilan, produced by Dupont-Mitsui Polychemicals Co., Ltd.) was placed in the gap between the photoelectrode and the counter electrode. An antireflection film (produced by Hori Co., Ltd.) was attached to the light irradiation surface of the counter electrode.

Then, 0.01 M I₂ (iodine), 0.02 M LiI (lithium iodide), 0.24 M DMPII (1,2-dimethyl-3-propylimidazolium iodide), and 1.0 M TBP (tert-butylpyridine) were dissolved in acetonitrile to prepare an electrolyte solution. The prepared electrolyte solution was placed in the gap between the photoelectrode and the counter electrode to form an electrolyte layer.

Subsequently, the gap between both electrodes was sealed with a UV-cured acrylic resin (TB3017B, sealing material, produced by ThreeBond). Thus, dye-sensitized solar cells were produced.

A PMMA (Polymethyl methacrylate) linear Fresnel lens (produced by Nihon Tokushu Kogaku Jushi Co., Ltd.) was used as the condenser lens to converge the incident light. The condensing rate when the incident light was converged by the condenser lens was determined from the current value during the convergence of light, using a silicon standard cell (produced by Bunkoukeiki Co., Ltd.).

### (4) Evaluation Results

Table 3 shows the photoelectric conversion efficiency of the dye-sensitized solar cells in which the surface-treated metal titanium had different widths and aspect ratios (balance of length and width) of titanium oxide coatings. Table 4 shows the photoelectric conversion efficiency, which corresponds to the electrical power generated during light concentration by the light-concentrating device, of the dye-sensitized solar cell in which the titanium oxide coating area was 0.8 cm² (2 mm x 40 mm) .

**Table 3**

| Oxide coating area | Photoelectric conversion efficiency (%) |
|---|---|
| 2 mm x 40 mm | 6.57 |
| 3 mm x 40 mm | 6.01 |
| 5 mm x 40 mm | 5.25 |
| 10 mm x 40 mm | 4.89 |

**Table 4**

| Condensing rate (%) | Photoelectric conversion efficiency (%) |
|---|---|
| 100 (No light condensed) | 6.57 |
| 649 (Light condensed) | 17.51 |
| 809 (Light condensed) | 19.50 |

The results revealed that when an oxide coating layer was formed in a rectangular shape with a narrow cell width and a high aspect ratio (balance of length and width), the photoelectric conversion efficiency of the obtained dye-sensitized solar cell was improved. Moreover, the photoelectric conversion efficiency of the dye-sensitized solar cell using the photoelectrode substrate having a titanium oxide coating with a width of 2 mm was further improved, and high electrical power was obtained.

It was found that the generated electrical energy was equal to that of silicon solar cells, which form the mainstream of current solar cells.

### Example 4

### (1) Production of Anodized Titanium Material

A metal titanium plate (titanium material, photoelectrode substrate) was degreased with trichloroethylene. Using a nitriding furnace (NVF-600-PC, produced by Nakanihon-Ro Kogyo Co., Ltd.), titanium nitride was formed on the surface of the degreased metal titanium plate.

First, the metal titanium plate was held by a plate carbon material placed in the nitriding furnace. Subsequently, in order to remove oxygen, the pressure in the nitriding furnace was reduced to 1 Pa or less, and then high-purity (99.99%) nitrogen gas was introduced into the nitriding furnace to return the pressure to 0.1 MPa (atmospheric pressure). Then, the temperature of the nitriding furnace was raised to 950°C for 2 hours. Thereafter, heat treatment was performed in the nitriding furnace at 950°C for 1 hour, thereby forming titanium nitride on the surface of the metal titanium plate.

The metal titanium plate with titanium nitride formed on the surface thereof was anodized with 1.5 M sulfuric acid, 0.05 M phosphoric acid, and 0.3 M hydrogen peroxide at a current density of 4 A/dm² for 30 minutes. Thus, an anatase-type titanium oxide film was formed.

### (2) Production of Photoelectrode

A dye-sensitized solar cell was produced using the above surface-treated metal titanium plate (10 mm x 50 mm) as a photoelectrode.

First, the surface-treated metal titanium plate was washed with a solvent, and then an oxygen flow was applied (0.05 MPa, 5 min) in a UV ozone cleaner (UV253S, produced by Filgen, Inc.). After ultraviolet irradiation for 30 minutes, a nitrogen flow was further applied (0.2 MPa, 7.5 min). After this treatment, the surface-treated material was coated three times with a titanium oxide material (PST-18NR, produced by JGC Catalysts and Chemicals Ltd.) by a squeegee method so that the coated area was 1.2 cm² (3 mm x 40 mm) to form a semiconductor layer, followed by firing at 450°C for 1 hour. Further, an oxygen flow was applied (0.05 MPa, 5 min) in a UV ozone cleaner (UV253S, produced by Filgen, Inc.). After ultraviolet irradiation for 30 minutes, a nitrogen flow was further applied (0.2 MPa, 7.5 min).

Subsequently, 0.45 mM ruthenium-based dye N719 (dye sensitizing agent, produced by Solaronix) and 0.15 mM ruthenium-based dye N749 (dye sensitizing agent, produced by Solaronix) were diluted in a mixture of tert-butanol (t-BtOH) and acetonitrile (CH₃CN) to prepare a dye solution. The mixing ratio of t-BtOH to CH₃CN in the mixture was 1:1. The metal titanium plate after firing was immersed in the dye solution at 40°C for 14 hours, thereby obtaining a photoelectrode material.

The surface-treated metal titanium and metal titanium were each subjected to etching treatment by immersion in a 5% hydrofluoric acid solution for 5 minutes, thereby providing collecting parts.

### (3) Production of Dye-Sensitized Solar Cell

The counter electrode used was a material (10 mm x 50 mm) obtained by electron-beam deposition of platinum on an FTO (fluorine tin oxide)-coated glass plate (produced by Asahi Glass Co., Ltd.). A collecting part was provided by coating the material with silver paste (Dotite D-550, produced by Fujikurakasei Co., Ltd.). The thickness of the deposited platinum was 1 nm. A 30-µm-thick ionomer resin spacer (Himilan, produced by Dupont-Mitsui Polychemicals Co., Ltd.) was placed in the gap between the photoelectrode and the counter electrode. An antireflection film (produced by Hori Co., Ltd.) was attached to the light irradiation surface of the counter electrode. In addition, a counter electrode to which an antireflection film was not attached was prepared.

Then, 0.01 M I₂ (iodine), 0.02 M LiI (lithium iodide), 0.24 M DMPII (1,2-dimethyl-3-propylimidazolium iodide), and 1.0 M TBP (tert-butylpyridine) were dissolved in acetonitrile to prepare an electrolyte solution. The prepared electrolyte solution was placed in the gap between the photoelectrode and the counter electrode to form an electrolyte layer.

Subsequently, the gap between both electrodes was sealed with a UV-cured acrylic resin (TB3017B, sealing material, produced by ThreeBond). Thus, dye-sensitized solar cells were produced.

A PMMA (polymethyl methacrylate) linear Fresnel lens (produced by Nihon Tokushu Kogaku Jushi Co., Ltd.) was used as the condenser lens to converge the incident light. The condensing rate when the incident light was converged by the condenser lens was determined from the current value during the convergence of light, using a silicon standard cell (produced by Bunkoukeiki Co., Ltd.).

### (4) Evaluation Results

Table 5 shows the difference in apparent photoelectric conversion efficiency, which corresponds to the electrical power generated by the dye-sensitized solar cells, due to the presence of an antireflection film.

**Table 5**

| Condensing rate (%) | Presence of antireflection film | Photoelectric conversion efficiency (%) |
|---|---|---|
| 100 (No light condensed) | None | 5.82 |
| | Attached | 6.21 |
| 537 (Light condensed) | None | 12.73 |
| | Attached | 14.95 |

The results revealed that when an antireflection film was used, the photoelectric conversion efficiency of the obtained dye-sensitized solar cell was further improved, and high electrical power was generated.

### Reference Signs List

1. Titanium material
2. Dye sensitizing agent-containing semiconductor layer
3. Transparent conductive glass
4. Electrochemical (Electrochemical-reduction) catalyst layer
5. Electrolyte
6. Spacer
7. Sealing material
8. Light-concentrating device
9. Antireflection film

## Claims

1. A dye-sensitized solar cell in which a photoelectrode and a counter electrode are disposed opposite to each other via an electrolyte layer;
(1) the photoelectrode comprising a titanium material and a titanium oxide layer containing a dye sensitizing agent formed on the titanium material;
(2) the counter electrode comprising a transparent conductive glass or transparent conductive film coated with an electrochemical-reduction catalyst layer; and
(3) a light-concentrating device being disposed on the counter electrode side.

2. The dye-sensitized solar cell according to claim 1, wherein the titanium material is a material selected from the group consisting of metal titanium, titanium alloys, surface-treated metal titanium, and surface-treated titanium alloys.

3. The dye-sensitized solar cell according to claim 1 or 2, wherein the titanium oxide layer has a rectangular shape.

4. The dye-sensitized solar cell according to any one of claims 1 to 3, wherein the electrochemical-reduction catalyst layer is a platinum catalyst layer.

5. The dye-sensitized solar cell according to any one of claims 1 to 4, wherein the transparent conductive glass or transparent conductive film of the counter electrode is subjected to antireflection-film formation.

6. The dye-sensitized solar cell according to any one of claims 1 to 4, wherein the counter electrode further comprises an antireflection film on a light irradiation surface of the transparent conductive glass or transparent conductive film.

7. The dye-sensitized solar cell according to any one of claims 1 to 6, which is provided with a cooling system.

8. The dye-sensitized solar cell according to any one of claims 1 to 7, wherein the titanium material of the photoelectrode is produced by the following surface treatment method comprising the steps of:
(1) forming titanium nitride on the surface of a metal titanium material or titanium alloy material; and
(2) anodizing the metal titanium material or titanium alloy material with the titanium nitride formed on the surface thereof obtained in step (1) using an electrolyte solution that has an etching effect on titanium at a voltage higher than spark discharge generating voltage, thereby forming an anatase-type titanium oxide film.

9. The dye-sensitized solar cell according to any one of claims 1 to 7, wherein the titanium material of the photoelectrode is produced by the following surface treatment method comprising the steps of:
(1) forming titanium nitride on the surface of a metal titanium material or titanium alloy material;
(2) anodizing the metal titanium material or titanium alloy material with the titanium nitride formed on the surface thereof obtained in step (1) in an electrolyte solution that does not have an etching effect on titanium; and
(3) heating the anodized metal titanium material or titanium alloy material obtained in step (2) in an oxidizing atmosphere, thereby forming an anatase-type titanium oxide film.

10. The dye-sensitized solar cell according to claim 8 or 9, wherein the step of forming titanium nitride is performed by one treatment method selected from the group consisting of PVD treatment, CVD treatment, spraying treatment, heat treatment under an ammonia gas atmosphere, and heat treatment under a nitrogen gas atmosphere.

11. The dye-sensitized solar cell according to claim 10, wherein the heat treatment under a nitrogen gas atmosphere is performed in the presence of an oxygen-trapping agent.

12. A dye-sensitized solar cell in which a photoelectrode and a counter electrode are disposed opposite to each other via an electrolyte layer;
(1) the photoelectrode comprising a titanium material selected from the group consisting of metal titanium and titanium alloys, and a titanium oxide layer containing a dye sensitizing agent formed on the titanium material;
(2) the counter electrode comprising a transparent conductive glass or transparent conductive film coated with an electrochemical-reduction catalyst layer; and
(3) a light-concentrating device being disposed on the counter electrode side;
the electrochemical-reduction catalyst layer being a platinum catalyst layer having a thickness of 0.5 to 1 nm;
the electrolyte layer having a thickness of 25 to 100 µml ; and
the photoelectrode being produced by the following method comprising the steps of:
(1) forming titanium nitride on the surface of a metal titanium material or titanium alloy material;
(2) anodizing the metal titanium material or titanium alloy material with the titanium nitride formed on the surface thereof obtained in step (1) using an electrolyte solution that has an etching effect on titanium at a voltage higher than spark discharge generating voltage, thereby forming an anatase-type titanium oxide film; and
(3) applying a paste agent containing titanium oxide to the anatase-type titanium oxide film obtained in step (2), followed by heat treatment at a temperature of 400 to 500°C under an oxidizing atmosphere, thereby forming a titanium oxide layer.

13. A dye-sensitized solar cell in which a photoelectrode and a counter electrode are disposed opposite to each other via an electrolyte layer;
(1) the photoelectrode comprising a titanium material selected from the group consisting of metal titanium and titanium alloys, and a titanium oxide layer containing a dye sensitizing agent formed on the titanium material;
(2) the counter electrode comprising a transparent conductive glass or transparent conductive film coated with an electrochemical-reduction catalyst layer; and
(3) a light-concentrating device being disposed on the counter electrode side;
the electrochemical-reduction catalyst layer being a platinum catalyst layer having a thickness of 0.5 to 1 nm;
the electrolyte layer having a thickness of 25 to 100 µm; and
the photoelectrode being produced by the following method comprising the steps of:
(1) forming titanium nitride on the surface of a metal titanium material or titanium alloy material;
(2) anodizing the metal titanium material or titanium alloy material with the titanium nitride formed on the surface thereof obtained in step (1) in an electrolyte solution that does not have an etching effect on titanium;
(3) heating the anodized metal titanium material or titanium alloy material obtained in step (2) in an oxidizing atmosphere, thereby forming an anatase-type titanium oxide film; and
(4) applying a paste agent containing titanium oxide to the anatase-type titanium oxide film obtained in step (3), followed by heat treatment at a temperature of 400 to 500°C under an oxidizing atmosphere, thereby forming a titanium oxide layer.

14. The dye-sensitized solar cell according to claim 12 or 13, wherein the titanium oxide layer has a rectangular shape.

15. The dye-sensitized solar cell according to any one of claims 12 to 14, wherein the transparent conductive glass or transparent conductive film of the counter electrode is subjected to antireflection-film formation.

16. The dye-sensitized solar cell according to any one of claims 12 to 14, wherein the counter electrode further comprises an antireflection film on a light irradiation surface of the transparent conductive glass or transparent conductive film.

17. The dye-sensitized solar cell according to any one of claims 12 to 16, which is provided with a cooling system.

18. The dye-sensitized solar cell according to any one of claims 12 to 17, wherein the step of forming titanium nitride is performed by one treatment method selected from the group consisting of PVD treatment, CVD treatment, spraying treatment, heat treatment under an ammonia gas atmosphere, and heat treatment under a nitrogen gas atmosphere.

19. The dye-sensitized solar cell according to claim 18, wherein the heat treatment under a nitrogen gas atmosphere is performed in the presence of an oxygen-trapping agent.

20. A method for producing a dye-sensitized solar cell in which a photoelectrode and a counter electrode are disposed opposite to each other via an electrolyte layer;
(1) the photoelectrode comprising a titanium material and a titanium oxide layer containing a dye sensitizing agent formed on the titanium material;
(2) the counter electrode comprising a transparent conductive glass or transparent conductive film coated with an electrochemical-reduction catalyst layer; and
(3) a light-concentrating device being disposed on the counter electrode side;
the titanium material being a material selected from the group consisting of metal titanium and titanium alloys; and
the photoelectrode being produced by the following steps of:
(1) forming titanium nitride on the surface of a metal titanium material or titanium alloy material;
(2) anodizing the metal titanium material or titanium alloy material with the titanium nitride formed on the surface thereof obtained in step (1) using an electrolyte solution that has an etching effect on titanium at a voltage higher than spark discharge generating voltage, thereby forming an anatase-type titanium oxide film;
(3) applying a paste agent containing titanium oxide to the anatase-type titanium oxide film obtained in step (2), followed by heat treatment at a temperature of 400 to 500°C under an oxidizing atmosphere, thereby forming a titanium oxide layer; and
(4) immersing the titanium oxide layer obtained in step (3) in a solution containing a dye sensitizing agent so that the dye sensitizing agent is adsorbed to the titanium oxide layer.

21. A method for producing a dye-sensitized solar cell in which a photoelectrode and a counter electrode are disposed opposite to each other via an electrolyte layer;
(1) the photoelectrode comprising a titanium material and a titanium oxide layer containing a dye sensitizing agent formed on the titanium material;
(2) the counter electrode comprising a transparent conductive glass or transparent conductive film coated with an electrochemical-reduction catalyst layer; and
(3) a light-concentrating device being disposed on the counter electrode side;
the titanium material being a material selected from the group consisting of metal titanium and titanium alloys; and
the photoelectrode being produced by the following steps of:
(1) forming titanium nitride on the surface of a metal titanium material or titanium alloy material;
(2) anodizing the metal titanium material or titanium alloy material with the titanium nitride formed on the surface thereof obtained in step (1) in an electrolyte solution that does not have an etching effect on titanium;
(3) heating the anodized metal titanium material or titanium alloy material obtained in step (2) in an oxidizing atmosphere, thereby forming an anatase-type titanium oxide film;
(4) applying a paste agent containing titanium oxide to the anatase-type titanium oxide film obtained in step (3), followed by heat treatment at a temperature of 400 to 500°C under an oxidizing atmosphere, thereby forming a titanium oxide layer; and
(5) immersing the titanium oxide layer obtained in step (4) in a solution containing a dye sensitizing agent so that the dye sensitizing agent is adsorbed to the titanium oxide layer.

22. The method for producing a dye-sensitized solar cell according to claim 20 or 21, wherein the titanium oxide layer has a rectangular shape.

23. The method for producing a dye-sensitized solar cell according to any one of claims 20 to 22, wherein the electrochemical-reduction catalyst layer is a platinum catalyst layer.

24. The method for producing a dye-sensitized solar cell according to any one of claims 20 to 23, wherein the transparent conductive glass or transparent conductive film of the counter electrode is subjected to antireflection-film formation.

25. The method for producing a dye-sensitized solar cell according to any one of claims 20 to 23, wherein the counter electrode further comprises an antireflection film on a light irradiation surface of the transparent conductive glass or transparent conductive film.

26. The method for producing a dye-sensitized solar cell according to any one of claims 20 to 25, which is provided with a cooling system.

27. The method for producing a dye-sensitized solar cell according to any one of claims 20 to 26, wherein the step of forming titanium nitride is performed by one treatment method selected from the group consisting of PVD treatment, CVD treatment, spraying treatment, heat treatment under an ammonia gas atmosphere, and heat treatment under a nitrogen gas atmosphere.

28. The method for producing a dye-sensitized solar cell according to claim 27, wherein the heat treatment under a nitrogen gas atmosphere is performed in the presence of an oxygen-trapping agent.

29. The method for producing a dye-sensitized solar cell according to any one of claims 20 to 28, wherein the electrochemical-reduction catalyst layer is a platinum catalyst layer having a thickness of 0.5 to 1 nm.

30. The method for producing a dye-sensitized solar cell according to any one of claims 20 to 29, wherein the electrolyte layer has a thickness of 25 to 100 µm.
